# EUROPÄISCHE PATENTANMELDUNG

(11) **EP 2 161 593 A1**
(43) Veröffentlichungstag der Anmeldung: **10.03.2010**
(21) Anmeldenummer: 09166635.4
(22) Anmeldetag: 28.07.2009
(51) Int. Cl.: G01S 7/481

(54) **Optoelektronischer Sensor und Verfahren zum Anbringen**

(30) Priorität: 06.09.2008 DE 102008046179
(71) Anmelder: SICK AG, 79183 Waldkirch (DE)
(72) Erfinder: Kaspar, Michael, 79110 Freiburg (DE); Schulz, Thomas, 79183 Waldkirch (DE)
(74) Vertreter: Hehl, Ulrich

(57) **Zusammenfassung**

Es wird ein optoelektronischer Sensor (10) mit einem Sensorkopf (12), der einen Lichtsender (26) und/oder einen Lichtempfänger (32) aufweist, sowie mit einem Montagerumpf (14) angegeben, der an seinem einen Ende in eine Aufnahmeeinrichtung (16,18) für den Sensorkopf (12) übergeht und einen Montagebereich (22) zum Anbringen des Sensors (10) an einem Betriebsort aufweist. Dabei ist die Aufnahmeeinrichtung (16,18) derart ausgebildet, dass der Sensorkopf (12) gegenüber dem Montagerumpf (14) beweglich ist.

## Beschreibung

Die Erfindung betrifft einen optoelektronischen Sensor mit einem Sensorkopf und einem Montagerumpf nach dem Oberbegriff von Anspruch 1 sowie ein Verfahren zur Anbringung eines optoelektronischen Sensors nach dem Oberbegriff von Anspruch 12.

Beim Einsatz optischer Sensoren in industriellen Anlagen oder Maschinen ist es erforderlich, dass die Sensoren räumlich genau dort montiert werden, wo es ein Objekt zuverlässig zu detektieren gilt. Zumeist ist es nicht ohne Weiteres möglich, den Sensor an einem bereits vorhandenen Maschinenteil zu befestigen. Daher kommen in vielen Fällen sogenannte Stangenhaltesysteme zum Einsatz. Hierbei wird eine Rundprofilstange, üblicherweise mit einem standardisierten Durchmesser etwa von 12mm, über ein Klemmelement an ein Maschinenteil montiert. Am anderen Ende der Rundprofilstange wird ein weiteres Klemmelement und an dieses Klemmelement eine Montageplatte angebracht, die per Schraubverbindung fest mit dem Sensorgehäuse verbunden ist.

Über die Verbindung der beiden Klemmelemente mit der Rundprofilstange sowie mit der Montageplatte ist ein solches Stangenhaltesystem in der Lage, den Sensor individuell auf die richtige Position und Lage auszurichten. Dabei besteht eine große Auswahl an teilweise sogar mehrfach einstellbaren Freiheitsgraden.

Die vielfältigen Möglichkeiten bezüglich der Einstellung und Ausrichtung des Stangenhaltesystems erzeugen jedoch bei der Montage und der Ausrichtung des Sensors einen erheblichen technischen und zeitlichen Aufwand. Dies liegt zum einen an der großen Anzahl von Einzelteilen, nämlich zumindest der Rundprofilstangen, zwei ein- oder mehrteiligen Klemmelementen sowie vier oder mehr Schrauben samt Muttern und Unterlegscheiben zur Klemmung der Klemmelemente, die unter Zuhilfenahme verschiedener Werkzeuge zu dem beschriebenen Stangenhaltesystem zusammengesetzt werden müssen. Zum anderen muss jede einzelne Justagestelle des Stangenhaltesystems ausgerichtet werden, um den Sensor in die gewünschte Position und Lage zu bringen. Besonders wenn eine Vielzahl von Sensoren anzubringen ist, wird der Montage- und Ausrichtaufwand enorm. Aber auch ein Austausch eines Sensors ist aufwändig, denn dafür müssen pro Sensor zumindest zwei Schraubverbindungen gelöst und mit dem neuen Sensor wieder geschlossen werden, wobei anschließend in der Regel zumindest Nachbesserungen der Ausrichtung vorgenommen werden müssen.

Mangels Alternativen kommen die zuvor beschriebenen Stangenhaltesysteme sehr häufig auch dann zum Einsatz, wenn die Anlage, an die der Sensor angebracht werden soll, gar keine besonderen Anforderungen an die Ausrichtbarkeit des Sensors beziehungsweise der Sensorhalterung stellt. Dies ist beispielsweise der Fall, wenn der Sensor in Bezug auf die Achsen des betreffenden Anlagenteils lediglich parallel oder in einem Winkel von 90° ausgerichtet werden muss.

Eine Klemmvorrichtung für die Montage von Sensoren ist aus der DE 199 61 827 A1 bekannt. Sie wird in den beschriebenen herkömmlichen Stangenhaltesystemen eingesetzt und vermag daher die Zahl der Einzelteile und den Montageaufwand nicht zu verringern.

Von der Firma Leuze electronic GmbH & Co. KG, 73277 Owen, wird eine Sensorbaureihe PRK53 angeboten, bei welcher der Sensor in einem Metallgehäuse untergebracht ist, welches einen Stummel einer Rundstange aufweist. Sofern der Sensor an diesem Stummel montiert wird, stehen dann allerdings gar keine Freiheitsgrade für eine Ausrichtung zur Verfügung, allenfalls abgesehen von einer Drehjustierung des gesamten Sensors samt Gehäuse in einem Klemmelement, welches den Stummel fixiert. Für die praktische Anwendung sind daher doch wieder zusätzliche Montageelemente erforderlich, beispielsweise das oben beschriebene Stangenhaltesystem. Die zusätzlichen Einzelteile und der Montageaufwand werden deshalb gerade nicht vermieden. Zudem ist ein Austausch des Sensorkopfes oder eine Beweglichkeit gegenüber Gehäuse und Stummel nicht nur nicht vorgesehen, sondern sie läuft auch dem Konzept der Sensorbaureihe zuwider, bei der Anwendungen abgedichteter, spritzfester Sensoren in der Pharma- und Lebensmittelindustrie vorgesehen sind. Diese Dichtigkeit und Hygieneanforderungen würden durch Austauschbarkeit oder Beweglichkeit beeinträchtigt, da dann die glatte, lückenlose und leicht zu reinigende Außenkontur gestört würde.

Aus der DE 198 00 553 C2 ist eine optoelektronische Vorrichtung bekannt, bei der das Gehäuse eine von zwei Halbschalen gebildete Aufnahme aufweist, in welcher die aktiven Sensorelemente verdreht werden können. Damit wird zwar die Ausrichtbarkeit in den Drehrichtungen ermöglicht, es fehlt aber an einer Halterung zur Anbringung an einem Maschinenteil oder einem Förderband. Hierfür wäre man erneut auf Zusatzelemente angewiesen, beispielsweise das zuvor beschriebene Stangenhaltesystem.

Daher ist Aufgabe der Erfindung, die Montage und Ausrichtung eines Sensors zu vereinfachen.

Diese Aufgabe wird durch einen Sensor mit Sensorkopf und Montagerumpf gemäß Anspruch 1 sowie ein Verfahren zum Anbringen eines derartigen Sensors an einem Betriebsort gemäß Anspruch 12 gelöst. Dabei geht die erfindungsgemäße Lösung von der Vorstellung aus, Sensor und Montageteile zu integrieren, so dass letztlich bei der Montage nur noch ein zusammenhängendes Objekt gebraucht wird.

Die erfindungsgemäße Lösung hat den Vorteil, dass die Sensoren einfach und schnell an industriellen Anlagen montiert werden können. Der Ausrichtaufwand ist minimal. Montagezubehör ist nicht erforderlich, da alle benötigten Elemente Teil des Sensors sind. Der Anwender kann deshalb seine Anlagen deutlich schneller, effizienter und kostengünstiger mit optischer Sensortechnologie ausstatten oder diese warten und modernisieren. Dabei muss er nicht auf Variabilität bei der Ausrichtung verzichten. Diese Variabilität wird aber auf diejenigen Freiheitsgrade reduziert, die in der konkreten Anwendung wirklich gebraucht werden. Je nach Anwendung können daher verschiedene Ausführungsformen der Erfindung zum Einsatz kommen, je nachdem, ob beispielsweise ein Abstand, eine Höhe, ein Dreh- und/oder ein Kippwinkel ausrichtbar sein soll.

Der Sensorkopf hat die Funktionalität eines optoelektronischen Sensors. Je nach Typ des Sensors kann dieser getrennte oder gemeinsame Sende- und Empfangseinheiten aufweisen, beispielsweise getrennt wie bei einer Einweglichtschranke oder gemeinsam wie bei einem Lichttaster. Je nach Ausführung gehört zu dem Sensorkopf eine Optik, beispielsweise eine Linse zum Fokussieren eines Sendestrahls oder eine Abbildungsoptik für das Empfangselement, oder Blenden zum Einstellen von Sende- und Empfangskegel. Weiterhin ist bevorzugt auch die erforderliche Sensorelektronik in dem Sensorkopf vorgesehen, wie eine Treiberschaltung für den Sender, ein oder mehrere Mikroprozessoren, DSPs (Digital Signal Processor), FPGAs (Field Programmable Gate Array) oder andere Logikbausteine für die Signalverarbeitung und Auswertung, Bedienelemente und Einlernfunktionen und dergleichen. Schließlich ist vorteilhafterweise eine Schnittstelle vorgesehen, um Sensordaten zu kommunizieren, im Falle einer Lichtschranke oder eines ähnlichen Sensors per Schaltbefehl zu schalten, oder Befehle zu empfangen, wobei diese Schnittstelle nochmals bevorzugt über die Aufnahmeeinrichtung geführt wird.

Die Aufnahmeeinrichtung schafft dabei bevorzugt neben ihrer Primärfunktion als mechanische Verbindung zwischen Sensorkopf und Montagerumpf auch eine elektrische Verbindung zur Datenkommunikation und/oder Stromversorgung, wobei die entsprechenden Leitungen innen durch den Montagerumpf geführt und an dessen anderem Ende an eine Anlagensteuerung, ein Konfigurationsgerät wie einen Computer oder ein PDA und/oder eine Versorgung angeschlossen sind. Damit werden die Anschlussleitungen für den Sensor vor mechanischer oder sonstiger Beschädigung von dem Montagerumpf geschützt. Der übliche Betriebsort für die erfindungsgemäßen Sensoren ist an einer Anlage, einer Maschine oder einem Förderband, wo der Montagebereich beispielsweise an einem Anlagenteil oder in einer Profilschiene angebracht wird.

Die Aufnahmeeinrichtung ist bevorzugt durch den Sensorkopf von außen unzugänglich, insbesondere in einem Innenraum zwischen Montagerumpf und Sensorkopf angeordnet. Ist dann der Sensorkopf eingesetzt, so ist die Verbindungsstelle an der Aufnahmeeinrichtung gut geschützt und stört weder mechanisch noch ästhetisch die Außenkontur. Die beiden Elemente Sensorkopf und Montagerumpf verschmelzen damit aus Anwendersicht zu einem einheitlichen Sensor mit allen erforderlichen Montage- und Ausrichtmöglichkeiten. Bevorzugt sind auch die Anschlussleitungen innen geführt und damit gegen aggressive Flüssigkeiten oder mechanische Beschädigung geschützt.

Der Montagerumpf ist bevorzugt zusammenhängend und insbesondere einstückig ausgebildet. Erfindungsgemäß ist der Montagerumpf zusammenhängend. Das bedeutet, dass zwar möglicherweise bewegliche Teile vorhanden sind, aber nicht vorgesehen ist, dass der Anwender durch Lösen von Schraubverbindungen oder dergleichen den Montagerumpf in mehrere Teile zerlegen kann. Einstückig bedeutet darüber hinaus noch, dass der Montagerumpf auch fertigungstechnisch nicht aus mehreren Einzelteilen zusammengesetzt ist.

In einer Weiterbildung der Erfindung geht der Montagerumpf bevorzugt integrativ in ein Gehäuse für den Sensorkopf über, wobei das Gehäuse die Aufnahmeeinrichtung umfasst oder bildet. Dabei wird der Sensorkopf in das Gehäuse eingesetzt. Die mechanische Verbindung und Vereinheitlichung ist dabei besonders ausgeprägt.
Die Aufnahmeeinrichtung ist bevorzugt dafür ausgebildet, den Sensorkopf freizugeben und zu fixieren, so dass der Sensorkopf austauschbar ist. Diese Austauschbarkeit kann sich sowohl auf Fertigung wie auf die Anwendung beziehen. Der Montagerumpf bildet eine standardisierte Basis für verschiedene Sensoren und schafft damit auf einfache Weise Flexibilität. Sowohl zur Wartung wie zur Modernisierung ist ein unkomplizierter und schneller Austausch der Funktionalität ermöglicht.

Die Aufnahmeeinrichtung ist bevorzugt derart ausgebildet, dass der Sensorkopf nur in einer Dreh- und/oder einer Kipprichtung gegenüber dem Montagerumpf beweglich ist, und wobei die Beweglichkeit durch Feststellelemente und/oder Rasterungen eingeschränkt oder fixiert werden kann. Dies betrifft zwei in der Praxis häufig gebrauchte Freiheitsgrade zur Ausrichtung. Die Drehung oder Kippung kann auch nur in der Fertigung flexibel sein und ab Werk fixiert sein. Weiterhin ist eine gerasterte Verstellbarkeit für eine granulare Einstellung mit weniger Auswahlmöglichkeiten denkbar. Eine vorgesehene Drehbarkeit des Sensorkopfes gegenüber dem Montagerumpf mit einer Fixiermöglichkeit ist deutlich anwenderfreundlicher als das herkömmliche Drehen einer Haltestange und anschließende Fixieren über Schrauben mittels eines Klemmelements mit den zahlreichen erforderlichen Einzelteilen.

Die Aufnahmeeinrichtung gemeinsam mit dem Sensorkopf und/oder der Montagerumpf sind bevorzugt dafür ausgebildet, durch teleskopartiges Aus- und Einziehen verstellt zu werden. Damit lassen sich Freiheitsgrade in einer Abstands- und/oder Höhenrichtung verstellen.

Entsprechend dem erfindungsgemäßen Konzept werden auch die aufgrund der Integration in den Monaterumpf und/oder die Aufnahmeeinrichtung wesentlich komfortableren Einstellungsmöglichkeiten der Erfindung sparsam eingesetzt. Man verwendet also die für eine Anwendung vorgesehenen Sensoren, die dann zwar nur wenige, dafür aber genau die erforderlichen Einstellungsmöglichkeiten mitbringen und die somit effektiv viel schneller ausgerichtet werden können und einsatzbereit sind. Die derart ausgewählten Freiheitsgrade können zudem auch nur in einem beschränkten Bereich einstellbar ausgebildet sein, um grobe Fehlausrichtungen weiter einzuschränken.

Der Montagebereich ist von dem einen Ende ausgehend zunächst in einer Längsrichtung langgestreckt ausgebildet und dann nicht, einfach oder mehrfach abgewinkelt, wobei die Längsrichtung zugleich mit der Längsachse des Sensorkopfes zusammenfällt und die optische Achse des Sensorkopfs senkrecht zu der Längsrichtung steht. Damit stehen so wenig Abwinklungen wie möglich und so viele wie erforderlich zur Verfügung, um den Sensor an einer Anlage zu montieren. Die gemäß der beschriebenen Ausführungsform ausgebildeten Sensoren detektieren in der Praxis meist in einer horizontalen Richtung, etwa quer zu einem Förderband. Es sind andere Ausführungsformen denkbar, in dem die Detektionsrichtung mit der Achse des Montagerumpfes im Bereich der Aufnahmerichtung zusammenfällt, die also quasi geradeaus und nicht quer detektieren.

Der Montagerumpf ist vorteilhaft als runde oder eckige Haltestange insbesondere mit Hohlprofil ausgebildet, wobei sich der Montagerumpf an dem einen Ende verbreitert, um den Sensorkopf zumindest teilweise zu umschließen. Das Hohlprofil ermöglicht Material- und Gewichtsersparnis sowie ein Führen der Anschlussleitungen im Inneren. Bevorzugt ist der Durchmesser standardisiert, beträgt beispielsweise 12mm. Die Länge der Haltestange insgesamt und zwischen Abwinklungen ist an die vorgesehene Anwendung angepasst. Ein sich verbreiterndes Hohlprofil im Bereich der Aufnahmeeinrichtung gibt dem Sensorkopf sicheren Halt und schützt ihn zumindest teilweise. Der verbreiterte Bereich kann je nach Ausführungsform nur einen kleinen Teil des Sensorkopfes bis hin zu beinahe dem gesamten Sensorkopf umschließen. Dabei erfüllt der Montagerumpf mehr und mehr die Aufgabe eines Sensorgehäuses.

Bevorzugt weist der Montagebereich ein Montageelement auf, insbesondere ein Klemmelement, wobei dieses Klemmelement im Montagebereich verschieblich, aber verliersicher angeordnet ist. Damit kann der Montagerumpf problemlos beispielsweise an einem Anlagenteil oder einer Profilschiene montiert werden. Dabei nochmals bevorzugt sind Elemente oder in sich erneut verliersicher eingesetzte Schrauben in das Klemmelement integriert, mit der die Klemmspannung erzeugt oder gelöst werden kann. Es ist auch denkbar, das Klemmelement ohne Verschiebemöglichkeit vorzusehen, dann besteht in Verschieberichtung kein einstellbarer Freiheitsgrad. Die Verliersicherheit kann beispielsweise durch eine partielle Verjüngung des Montagerumpfes, eine Nut oder eine Verdickung sichergestellt werden.

Der erfindungsgemäße Sensor ist bevorzugt als Einweglichtschranke, Reflexionslichtschranke oder Lichttaster ausgebildet. Dies sind typische Beispiele häufig eingesetzter optoelektronischer Sensoren, bei denen eine Flexibilität oft nur in einem Teil der Freiheitsgrade erforderlich ist, weil standardisierte Anwendungen wie an einem Förderband keine allzu hohen Ansprüche an die Ausrichtung stellen. Grundsätzlich ist aber auch jeder andere optoelektronische Sensortyp denkbar, also auch Sensoren zur Kontrasterkennung, zur Farberkennung, Entfernungsmessung und weitere.

Das erfindungsgemäße Verfahren kann auf ähnliche Weise durch weitere Merkmale ausgestaltet werden und zeigt dabei ähnliche Vorteile. Derartige weitere Merkmale sind beispielhaft, aber nicht abschließend, in den sich an den Vorrichtungsanspruch anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: eine schematische dreidimensionale Außenansicht einer Ausführungsform des erfindungsgemäßen Sensors;
- Fig. 2: ein Blockschaltbild als schematisch vereinfachte Längsschnittdarstellung des Sensors gemäß Figur 1;
- Fig. 3: eine schematische Darstellung der Anbringung eines beispielhaft als Einweglichtschranke ausgebildeten Sensors gemäß Figur 1 über einem Förderband;
- Fig. 4: eine weitere Ausführungsform des erfindungsgemäßen Sensors mit einer zweifach abgewinkelten Rundprofilstange;
- Fig. 5: eine weitere Ausführungsform des erfindungsgemäßen Sensors mit einer einfach abgewinkelten Haltestange mit rechteckigem Profil;
- Fig. 6: eine weitere Ausführungsform des erfindungsgemäßen Sensors mit einer teleskopartigen Einstellbarkeit der Höhe:
- Fig. 7: eine weitere Ausführungsform des erfindungsgemäßen Sensors mit einem verkippbaren Sensorkopf;
- Fig. 8: eine weitere Ausführungsform des erfindungsgemäßen Sensors mit einem verliersicher angebrachten Klemmelement;
- Fig. 9: eine weitere Ausführungsform des erfindungsgemäßen Sensors mit einem anderen verliersicher angebrachten Klemmelement in der Draufsicht; und
- Fig. 10: eine Querschnittsdarstellung des Klemmelements gemäß Fig. 9.

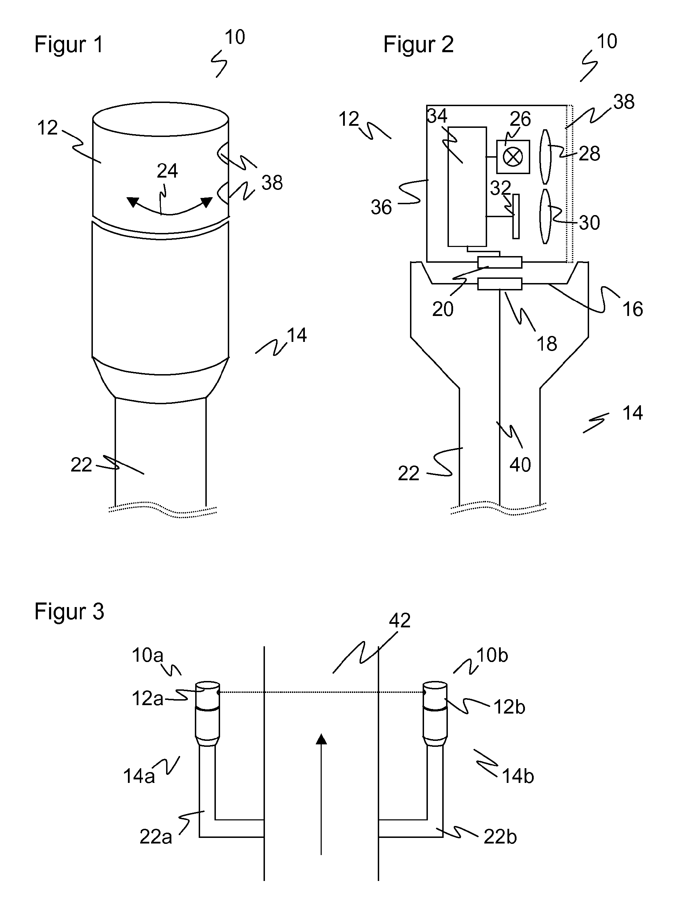

Figur 1 zeigt eine Ausführungsform eines erfindungsgemäßen Sensors 10 in einer vereinfachten schematischen dreidimensionalen Außenansicht. In einer sehr vereinfachten Blockdarstellung ist der Sensor 10 in Figur 2 erneut und im Längsschnitt gezeigt, um die in der Außenansicht nicht sichtbaren Elemente zu illustrieren. In der gesamten Beschreibung bezeichnen gleiche Bezugszeichen die gleichen Merkmale.

Der Sensor 10 weist einen Sensorkopf 12 und einen Montagerumpf 14 auf. In dem Montagerumpf 14 ist ein Aufnahmebereich 16 vorgesehen, in den der Sensorkopf 12 eingesetzt ist. Über einen Montagerumpfanschluss 18 in dem Aufnahmebereich 16 und einen entsprechenden Sensorkopfanschluss 20 sind Sensorkopf 12 und Montagerumpf 14 miteinander verbunden. Die Anschlüsse 18, 20 können sowohl eine mechanische wie eine elektrische Verbindung herstellen. Die mechanische Verbindung kann alternativ oder zusätzlich zu einer Verbindung über die Anschlüsse 18, 20 durch einfache Aufnahme des Sensorkopfes 12 in dem Aufnahmebereich 16 oder zusätzliche, nicht dargestellte mechanische Fixierungselemente erfolgen. Dazu ist in diesem Ausführungsbeispiel der Montagerumpf 14 an seinem Ende mit dem Aufnahmebereich 16 verbreitert ausgeführt. In der Richtung weg von dem Sensorkopf 12 verjüngt sich der Montagerumpf 14 zu einem Montagebereich 22, von dem in den beiden Figuren nur der oberste Teil gezeigt ist.

Der Sensorkopf 12 kann, wie durch einen Pfeil 24 angedeutet, gegenüber dem Montagerumpf 14 verdreht werden. Dazu sind die Anschlüsse 18, 20 beispielsweise als Schleifkontakt ausgeführt.

Der Sensorkopf 12 umfasst die für die Funktionalität eines optoelektronischen Sensors erforderlichen Elemente. In Figur 2 ist sehr vereinfacht ein Lichtsender 26 dargestellt, der über eine Sendeoptik 28 Licht in einen Überwachungsbereich ausstrahlt, welches dort reflektiert oder remittiert und über eine Empfangsoptik 30 in einem Empfangselement 32 detektiert wird. Eine Steuerung 34 steuert den Lichtsender 26 und verarbeitet die Empfangssignale des Empfangselements 32. Dieser Aufbau ist nur als Beispiel zu verstehen. Sämtliche denkbaren Formen eines Lichtsenders 28, wie eine Halogenlampe, ein als LED oder Laserdiode ausgebildetes Halbleiterelement, eines Lichtempfängers 32 als Photodiode bis hin zu einer als CCD- oder CMOS-Chip ausgebildeten Empfangszeile oder Empfangsmatrix, einer Optik 28, 30 wie dargestellt als einfache Sammellinse oder anderer und einer Steuerung 34 als Mikroprozessor, als anderer digitaler Logikbaustein oder als analoge Schaltung sind möglich. Entsprechend sind auch andere Anordnungen als gemäß dem dargestellten Doppelaugenprinzip möglich, beispielsweise eine Autokollimationsanordnung. Schließlich ist auch denkbar, dass nur Sender 28 oder nur Empfänger 32 in dem Sensorkopf 12 vorgesehen ist. Der Sensor 10 ist häufig ein einfacher Sensor, etwa eine Einfach- oder Reflexionslichtschranke oder ein Taster, kann aber auch ein anderer optoelektronischer Sensor sein.

Der Sensorkopf 12 ist zum Schutz von einem Gehäuse 36 mit einer Frontscheibe 38 umgeben. Die Frontscheibe 38 ist in den dreidimensionalen Darstellungen als zwei kleine Sichtfenster für Sender 28 und Empfänger 32 veranschaulicht. In einer weiteren Ausführungsform der Erfindung ist der verbreiterte Aufnahmebereich 16 des Montagerumpfs 14 verlängert ausgeführt und umfasst den Sensorkopf 12 teilweise oder vollständig, bildet also zugleich Teile des Gehäuses 36 oder das gesamte Gehäuse 36. Umgekehrt kann auf die Verbreiterung des Montagerumpfs 12 verzichtet werden.

Der Montagerumpf 14 kann Materialien wie Edelstahl, Metall oder Kunststoff aufweisen. Für besondere Anwendungen ist denkbar, den Aufnahmebereich 16 nach Einsetzen des Sensorkopfes 12 sowie das Gehäuse 36 und den Übergang zu der Frontscheibe 38 abzudichten. Mit geeigneten Materialien, beispielsweise Edelstahl oder fluorierten Kunststoffen, ist dann auch ein Einsatz in der Lebensmittelindustrie möglich.

In einer anderen Ausführungsform ist der Sensorkopf 12 austauschbar, indem die Verbindung im Aufnahmebereich 16 an den Anschlüssen 18, 20 gelöst wird. Damit kann der Sensorkopf 12 problemlos gewartet oder gegen einen intakten beziehungsweise anderen oder moderneren Sensorkopf 12 ausgetauscht werden. Eine teilweise oder vollständige Demontage des Montagerumpfs 14 ist dabei nicht erforderlich. Der Montagerumpf 14 kann auch als standardisierte Montagebasis für verschiedenartige Sensoren ausgebildet sein, in die dann je nach Anwendung ein Sensorkopf 12 mit einer gewünschten Funktionalität eingesetzt wird.

Der Aufnahmebereich 16 und die Anschlüsse 18, 20 sind von Außen nicht erkennbar. Auch die Anschlussleitungen 40 sind innen in dem Montagerumpf 14 geführt, stören damit nicht bei Montage und Betrieb und sind geschützt.

Figur 3 zeigt schematisch die Anbringung des Sensors 10 über einem Förderband 42 in einer Ausführungsform als Einweglichtschranke. Sender 10a und Empfänger 10b des Sensors 10 weisen jeweils einen Sensorkopf 12a, 12b und einen Montagerumpf 14a, 14b auf und sind über Montagebereiche 22a, 22b jeweils an dem Förderband 22 montiert. Höhe und Abstand müssen in diesem Beispiel nicht eingestellt werden und sind über den Montagerumpf 14a, 14b vorgegeben. Die Sensorköpfe 12a, 12b können jeweils gegenüber dem Montagerumpf 14a, 14b verdreht werden, um sie gegeneinander auszurichten.

In derartigen Anwendungen ist meist gewünscht, den Montagerumpf 14 beim Übergang in den Aufnahmebereich 16 vertikal auszurichten, während die optische Achse des Sensorkopfs 12 quer und damit horizontal steht. In einer alternativen Ausführungsform kann aber auch der Montagerumpf 14 zu dem Aufnahmebereich 16 hin horizontal geführt werden, und die optische Achse des Sensorkopfs 12 stimmt mit dieser horizontalen Richtung überein, liegt also in der Verlängerung des Montagerumpfs 14.

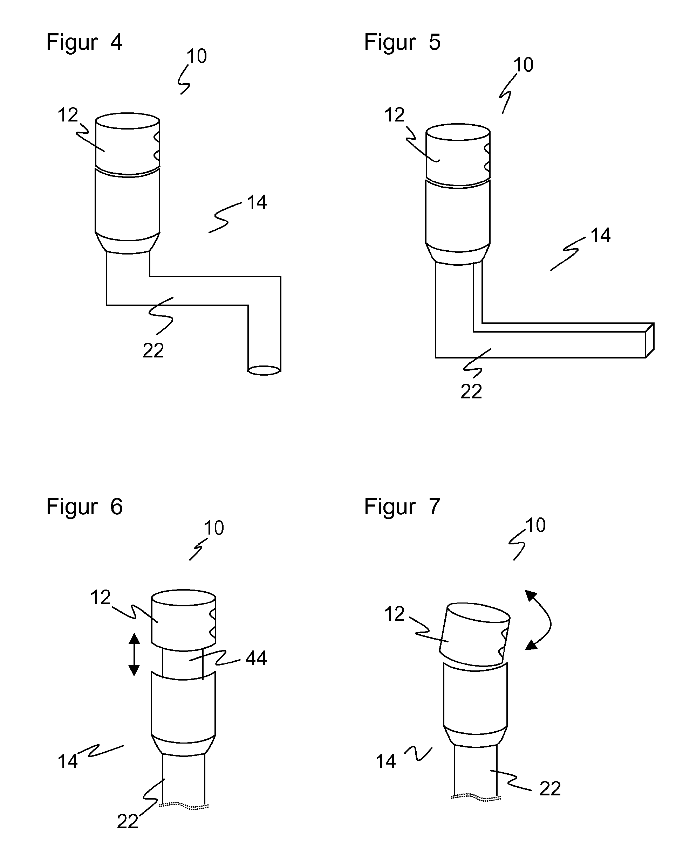

Die Figuren 4 und 5 zeigen verschiedene Ausführungsformen für den Montagebereich 22 des Montagerumpfs 14. In Figur 4 ist der Montagebereich 22 als Rundprofil, bevorzugt als Rundhohlprofil zur Aufnahme der Anschlussleitungen 40 ausgebildet und zweifach abgewinkelt. Figur 5 zeigt einen einfach abgewinkelten Montagebereich 22 mit einem eckigen Profil. Andere Kombinationen und weitere oder keine Abwinklungen sind denkbar. Die Schenkellängen der Teilstücke des Montagebereichs 22 und dessen Querschnitt können für die gewünschte Anwendung und Montierung ausgewählt werden. Bevorzugt ist der Außendurchmesser in dem Montagebereich 22 standardisiert und beträgt beispielsweise 12mm.

Figur 6 zeigt eine Ausführungsform des Sensors 10 mit einer Verstellmöglichkeit in einer Höhenrichtung. Dabei hängt die Bezeichnung "Höhe" natürlich von der Montage ab. Dazu ist eine Teleskopfeinrichtung 44 in dem Aufnahmebereich 16, alternativ auch in dem Montagebereich 22 vorgesehen. Ist der Montagebereich 22 abgewinkelt, so können eine oder mehrere entsprechende Teleskopeinrichtungen für eine Verstellung von Abständen und/oder Höhen Verwendung finden.

In einer Ausführungsform gemäß Figur 7 ist eine Verkippung des Sensorkopfes 12 gegenüber dem Montagerumpf 14 ermöglicht. Statt wie dargestellt einem Gelenk im Aufnahmebereich 16 können auch ein oder mehrere Gelenke im Montagebereich 22 vorgesehen sein. Die Gelenkkonstruktion ermöglicht dem Anwender, den Winkel der optischen Achse des Sensors 10 um ein definiertes Maß zu verstellen. Beispielsweise kann bei aufrechter Montage die optische Achse vertikal nach oben oder unten verstellt werden.

In einer alternativen Ausführungsform zur Realisierung einer Verkippung ist mit dem Montagerumpf 14 oder dem Sensorkopf 12 ein Spiegel vorzugsweise integrativ verbunden und von dem Gehäuse 36 geschützt, welcher eine Einstellung des Sichtwinkels ermöglicht. Dazu eignet sich besonders eine Ausführungsform des Sensors 10, bei welcher die optische Achse des Sensorkopfes nicht wie in Figur 7 um 90° gegenüber der Aufnahmerichtung in den Montagerumpf 14 gekippt, sondern deren direkte Verlängerung in einem Winkel von 0° bildet.

Sämtliche verstellbaren Freiheitsgrade sind prinzipiell kombinierbar. Je nach Anwendung ist diejenige Ausführungsform zu wählen, mit der die tatsächlich erforderlichen Freiheitsgrade verstellbar sind. Denkbar ist auch, nur eine Art von Montagerumpf 14 als gemeinsame Basis vorzusehen, möglicherweise mit verschiedenen Schenkellängen, Profilen und verschiedener Anzahl von Abwinklungen, welcher sämtliche verstellbaren Freiheitsgrade anbietet. Die oder einige der Freiheitsgrade können dann auch nur in der Fertigung variabel und zur Montage festgestellt sein, um die Montage am Betriebsort zu vereinfachen. Weiterhin ist eine Beschränkung des Einstellraums oder eine Rasterung vorstellbar, um die Ausrichtung zu vereinfachen. Dabei bleibt aber das Befestigungskonzept immer integrativ, d.h. der Montagerumpf 14 weist keine lösbaren Einzelteile auf, sondern bildet mit dem Montagebereich 22 ein zusammenhängendes Teil, das in vielen Fällen auch einstückig ausgebildet sein kann.

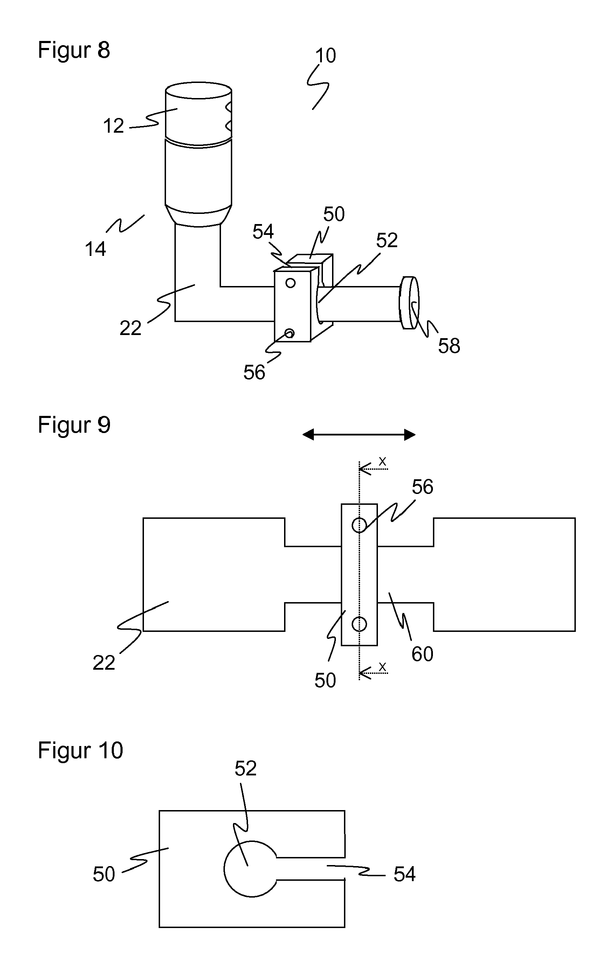

In den Figuren 8 bis 10 ist eine Ausführungsform des Sensors 10 mit einem integrierten Klemmelement 50 im Montagebereich 22 dargestellt. Dabei zeigt Figur 8 eine dreidimensionale Ansicht des gesamten Sensors 10, Figur 9 eine Draufsicht auf den Teil des Montagebereichs 22, in dem das Klemmelement 50 vorgesehen ist, und Figur 10 eine Schnittdarstellung des Klemmelements 50.

Das Klemmelement 50 ist auf den Montagebereich 22 aufgesetzt und weist dazu eine an den Durchmesser und das Profil des Montagebereichs 22 angepasste Öffnung 52 auf. Über einen Schlitz 54 und Klemmspannungselemente kann eine Klemmspannung erzeugt oder aufgehoben werden. Das Klemmelement 50 wird beispielsweise mittels Schrauben 56 an einem Anlagenteil oder einer Profilschiene befestigt. Diese Schraubverbindung 56 kann zugleich die Klemmspannung erzeugen, oder es sind hierfür eigene, nicht dargestellte Klemmspannungselemente vorgesehen. Schrauben und Klemmspannungselemente sind ebenfalls verliersicher in dem Klemmelement 50 vormontiert.

Der Montagebereich 22 und damit der Sensor 10 ist dann noch verschieb- und drehbar, bis eine hinreichende Klemmspannung erzeugt wird. Dabei ist das Klemmelement 50 verliersicher mit dem Montagebereich 22 verbunden, beispielsweise über eine Verdickung 58 des Montagebereichs oder indem ein im Durchmesser verjüngter Klemmverschiebebereich 60 des Montagebereichs 22 vorgesehen ist.

In den einzelnen Figuren sind jeweils feste Kombinationen der erfindungsgemäßen Merkmale dargestellt. Es sind aber darüber hinaus auch Mischformen von der Erfindung umfasst, beispielsweise andere Formen des Montagerumpfs 14 mit anderen Profilen oder Abwinklungen, und beliebige Kombinationen der einzeln beschriebenen Verstellmöglichkeiten von Freiheitsgraden bei der Ausrichtung.

Die Erfindung kombiniert optoelektronische Sensortechnik und Befestigungstechnik insbesondere mit Hilfe von Haltestangen in einem Gerät. Mit Hilfe des erfindungsgemäßen Befestigungskonzepts werden Montage, Ausrichtung und Austausch von Sensoren an einer Anlage oder Maschine deutlich beschleunigt und vereinfacht. Im Gegensatz zu herkömmlichen Stangenhaltesystemen sind Sensor, Stange und je nach Ausführungsform auch Montageklemme integriert. Durch die integrierte Befestigungslösung ist eine direkte Montage des Sensors an die Maschine oder Anlage ermöglicht. Gleichzeitig ist die Zahl der Einzelteile deutlich reduziert, und damit entsteht ein geringerer administrativer, planerischer und Lageraufwand auf Seiten des Herstellers wie des Anwenders. Nicht zuletzt kann das erfinderische integrativ in den Sensorkopf übergehende Halterungskonzept auch mit einem ansprechenderen Design verwirklicht werden als die zahlreichen Einzelteile eines Stangenhaltesystems.

## Patentansprüche

1. Optoelektronischer Sensor (10) mit einem Sensorkopf (12), der einen Lichtsender (26) und/oder einen Lichtempfänger (32) aufweist, sowie mit einem Montagerumpf (14), der an seinem einen Ende in eine Aufnahmeeinrichtung (16, 18) für den Sensorkopf (12) übergeht und einen Montagebereich (22) zum Anbringen des Sensors (10) an einem Betriebsort aufweist,
**dadurch gekennzeichnet,**
**dass** die Aufnahmeeinrichtung (16, 18) derart ausgebildet ist, dass der Sensorkopf (12) gegenüber dem Montagerumpf (14) beweglich ist.

2. Sensor (10) nach Anspruch 1,
wobei die Aufnahmeeinrichtung (16, 18) durch den Sensorkopf (12) von außen unzugänglich, insbesondere in einem Innenraum zwischen Montagerumpf (14) und Sensorkopf (12) angeordnet ist.

3. Sensor (10) nach Anspruch 1 oder 2,
wobei der Montagerumpf (14) zusammenhängend und insbesondere einstückig ausgebildet ist.

4. Sensor (10) nach einem der vorhergehenden Ansprüche,
wobei der Montagerumpf (14) integrativ in ein Gehäuse (36) für den Sensorkopf (12) übergeht und das Gehäuse (36) die Aufnahmeeinrichtung (16, 18, 20) umfasst oder bildet.

5. Sensor (10) nach einem der vorhergehenden Ansprüche,
wobei die Aufnahmeeinrichtung (16, 18) dafür ausgebildet ist, den Sensorkopf (12) freizugeben und zu fixieren, so dass der Sensorkopf (12) austauschbar ist.

6. Sensor (10) nach einem der vorhergehenden Ansprüche,
wobei die Aufnahmeeinrichtung (16, 18) derart ausgebildet ist, dass der Sensorkopf (12) nur in einer Dreh- und/oder einer Kipprichtung gegenüber dem Montagerumpf (14) beweglich ist, und wobei die Beweglichkeit durch Feststellelemente und/oder Rasterungen eingeschränkt oder fixiert werden kann.

7. Sensor (10) nach einem der vorhergehenden Ansprüche,
wobei die Aufnahmeeinrichtung (16, 44) gemeinsam mit dem Sensorkopf (12) und/oder der Montagerumpf (14) dafür ausgebildet sind, durch teleskopartiges Aus- und Einziehen verstellt zu werden.

8. Sensor (10) nach einem der vorhergehenden Ansprüche,
wobei der Montagebereich (22) von dem einen Ende ausgehend zunächst in einer Längsrichtung langgestreckt ausgebildet ist und dann nicht, einfach oder mehrfach abgewinkelt ist, und wobei die Längsrichtung zugleich mit der Längsachse des Sensorkopfes (12) zusammenfällt und die optische Achse des Sensorkopfs (12) senkrecht zu der Längsrichtung steht.

9. Sensor (10) nach einem der vorhergehenden Ansprüche,
wobei der Montagerumpf (14) als runde oder eckige Haltestange insbesondere mit Hohlprofil ausgebildet ist und wobei sich der Montagerumpf (14) an dem einen Ende verbreitert, um den Sensorkopf (12) zumindest teilweise zu umschließen.

10. Sensor (10) nach einem der vorhergehenden Ansprüche,
wobei der Montagebereich (22) ein Montageelement aufweist, insbesondere ein Klemmelement (50), und wobei dieses Klemmelement (50) im Montagebereich (22, 60) verschieblich, aber verliersicher angeordnet ist.

11. Sensor (10) nach einem der vorhergehenden Ansprüche,
der als Einweglichtschranke, Reflexionslichtschranke oder Lichttaster ausgebildet ist.

12. Verfahren zum Anbringen eines optoelektronischen Sensors (10) an einem Betriebsort, wobei ein Sensorkopf (12) mit einem Lichtsender (26) und/oder einem Lichtempfänger (32) in eine Aufnahmeeinrichtung (16, 18) eines Montagerumpfes (14) eingesetzt wird, der an seinem einen Ende in die Aufnahmeeinrichtung (16, 18) für den Sensorkopf (12) übergeht, und wobei der Montagerumpf (14) mit einem Montagebereich (22) des Montagerumpfes (14) an dem Betriebsort angebracht wird,
**dadurch gekennzeichnet,**
**dass** der Sensorkopf (12) zur Ausrichtung gegenüber dem Montagerumpf (14) mittels der Aufnahmeeinrichtung (16, 18) bewegt wird.

13. Verfahren nach Anspruch 11,
wobei der Sensorkopf (12) von der Aufnahmeeinrichtung (16, 18) wahlweise freigegeben oder fixiert wird, um den Sensorkopf (12) auszutauschen.

14. Verfahren nach Anspruch 11 oder 12,
wobei der Sensorkopf (12) gegenüber der Aufnahmeeinrichtung (16, 18) nur in einer Dreh- und/oder einer Kipprichtung gegenüber dem Montagerumpf (14) bewegt wird und bewegt werden kann, und wobei die Beweglichkeit auch in Dreh- oder Kipprichtung durch Feststellelemente und/oder Rasterungen eingeschränkt oder fixiert wird.

15. Verfahren nach einem der Ansprüche 11 bis 13,
wobei der Montagerumpf (14) mittels eines an dem Montagebereich (22) verliersicher angebrachten Montageelements, insbesondere eines Klemmelements (50), in einer gewünschten Höhe und/oder einem gewünschten Abstand an dem Betriebsort montiert wird.
